# EUROPÄISCHE PATENTANMELDUNG

(11) **EP 4 403 496 A1**
(43) Veröffentlichungstag der Anmeldung: **24.07.2024**
(21) Anmeldenummer: 23151964.6
(22) Anmeldetag: 17.01.2023
(51) Int. Cl.: B65G 21/14, B65G 21/20, B65G 47/06, B65G 47/244, B65G 47/31

(54) **FÖRDEREINRICHTUNG**

(71) Anmelder: Rotzinger AG, 4303 Kaiseraugst (CH)
(72) Erfinder: Philipp, Kurt, 79639 Grenzach-Wyhlen (DE)
(74) Vertreter: Braunpat AG

(57) **Zusammenfassung**

Die Erfindung betrifft eine Fördereinrichtung (1) für eine Produktförderanlage zum Transportieren von stückgutartigen Produkten (P) in einer Förderrichtung, wobei die Fördereinrichtung (1) ein erstes umlaufendes Förderband (100) und ein an dieses anschliessendes zweites umlaufendes Förderband (200) umfasst und wobei die Produkte (P) als Produktreihen (PR) dem ersten Förderband (100) zuführbar und von dem ersten Förderband (100) an das zweite Förderband (200) übertragbar sind, wobei das erste Förderband (100) einlaufseitig eine Aufgabeumlenkung (101) und auslaufseitig eine erste Endumlenkung (104) aufweist, wobei die erste Endumlenkung (104) in Förderrichtung verschieblich gelagert ist, wobei das zweite Förderband (200) einlaufseitig eine zweite Endumlenkung (204), die in Förderrichtung verschieblich gelagert ist, und auslaufseitig eine Austragsumlenkung (203) aufweist, wobei die erste Endumlenkung (104) und die zweite Endumlenkung (204) in einem Übergabebereich (30) zur Übergabe von Produkten aneinander anschliessen, und wobei die erste Endumlenkung (104) und die zweite Endumlenkung (204) mittels eines ersten Antriebs (300) gemeinsam entlang der Förderrichtung verschiebbar sind, sodass eine fördernde Länge des ersten Förderbands (100) und eine fördernde Länge des zweiten Förderbands (200) während eines Transports von Produktreihen (PR) durch Verschieben der ersten und zweiten Endumlenkungen gegenläufig veränderlich sind, dadurch gekennzeichnet, dass die Fördereinrichtung (1) längliche Stützelemente (330) aufweist, mit welchen das erste Förderband (100) und das zweite Förderband (200) zumindest teilweise zwischen der Aufgabeumlenkung (101) und der Austragsumlenkung (203) gestützt werden. Vorteilhafterweise ist das zweite Förderband (200) als Doppelband ausgebildet, was die Drehung der Produkte mittels Fördereinrichtung (1) ermöglicht.

## Beschreibung

### Technisches Gebiet der Erfindung

Die Erfindung betrifft eine Fördereinrichtung und ein Steuerverfahren für eine Produktförderanlage zum Transportieren von stückgutartigen Produkten, die ein erstes Förderband und ein an dieses anschliessendes zweites Förderband umfasst, insbesondere eine Fördereinrichtung und ein Steuerverfahren bei der die Produkte als Produktreihen zugeführt werden.

### Stand der Technik

Bei der Herstellung von stückgutartigen Produkten in der Lebensmittelindustrie, wie z. B. Süsswaren, werden die Produkte zumeist reihenförmig von einer Produktionseinrichtung übernommen und über eine Förderanlage, bzw. ein Zufuhrsystem zu Weiterverarbeitungseinrichtungen, wie z. B. Verpackungseinrichtungen geführt. Hierbei umfasst die Förderanlage Förderbänder und ggf. auch Zwischenspeicher, wobei die Produktreihen aus dem Produktfluss entnommen und quer zur Hauptförderrichtung beispielsweise zu nachgeschalteten Verpackungslinien zugeführt werden. Die Förderbänder sind in der Regel als umlaufende Bänder ausgebildet, die an einem Aufgabeende um eine Aufgabeumlenkung und an einem Ausgangsende um eine Ausgangs- bzw. Endumlenkung geführt sind, wobei Stützbleche zumindest unter dem Obertrum vorgesehen sind, um die Produktreihen beim Transport auf dem Band zu stützen.

Typische Produkte sind beispielsweise riegelförmige Produkte, wie Schokoriegel und Schokotafeln, Müsliriegel oder riegelförmige längliche Cupcakes oder Milchschnitten etc. Diese reihenförmig produzierten Produkte können von sogenannten Queraustragestationen aus dem Fluss entnommen und auf ein beispielsweise unterhalb der Hauptförderebene und quer zur Hauptförderrichtung liegendes Queraustrageband gefahren werden, um dann in Richtung der Weiterverarbeitungseinrichtungen gefördert zu werden, wie es beispielsweise aus WO 2016/012229 A2 bekannt ist. Eine andere Produktzufuhr besteht beispielsweise darin, dass Produkte über ein Hauptbandsystem in einen Zwischenspeicher gefahren werden. Am Auslauf des Zwischenspeichers werden Produktreihen mit einem Ausschieber auf ein Queraustrageband einer Fördereinrichtung geschoben und ebenfalls in Richtung der nachgeschalteten Weiterverarbeitungseinrichtungen, insbesondere zu Verpackungslinien, ausgefahren.

Die Bauart solcher Zwischenspeicher ist aus dem Stand der Technik bekannt, es sind zumeist Gondel -oder Bandspeicher, die oft im First in - First out Prinzip arbeiten und somit in den Produktfluss eingeschlauft sind. Bandspeicher bestehen aus mehrlagigen Pufferbändern, wie beispielsweise aus WO 2022/117606 A1 bekannt ist. Gondelspeicher bestehen aus Produkteträgergondeln, die an umlaufenden Kettenpaaren drehbar eingehängt sind und in denen die Produktreihen auf Produkteträgertablaren in den Gondeln gelagert werden, wie beispielsweise aus WO 2017/021160 A1 bekannt.

Beim Austragen der Produkte auf ein Queraustrageband werden die zumeist länglichen Produkte mit ihrer Schmalseite führend auf das Queraustrageband ausgeschoben. Die Produkte werden dann mit ihrer Breitseite voran zur Weiterverarbeitung, wie etwa zu einer Verpackungslinie, gefördert. Viele der heutigen riegelförmigen Produkte werden in einer Plastikfolie verpackt. Die Maschinen laufen mit einer sehr hohen Stückleistung, diese kann beispielsweise bei 1500 Produkten/Minute liegen. Die Maschinen können nur durchlaufen, wenn die Produkte kontinuierlich, lückenlos und staudrucklos zugeführt werden. Ausserdem müssen die Produkte einen bestimmten regelmässigen Abstand zueinander haben, wobei dieser Abstand über der variablen Geschwindigkeit konstant bleiben muss, damit die Produkte regelmässig und kontinuierlich in eine mit Nocken bestückte Kette der Verpackungsmaschine übergeben werden können. Man spricht hier auch von einer positions-und geschwindigkeitssynchronen Übergabe der Produkte in eine virtuelle Taktkette einer Weiterverarbeitungseinrichtung, wie der Verpackungsmaschine.

Durch das Austragen der Produkte auf das Queraustrageband entsteht eine Lücke im Produktfluss zur Weiterverarbeitungseinrichtung. Diese Lücke wird gemäss Stand der Technik zumeist mit kurzen Lückenschliessbändern geschlossen.

Oftmals benötigen die Weiterverarbeitungseinrichtungen die Produkte längs ausgerichtet, also mit der schmalen Seite voran. Dann müssen die Produkte nach der Lückenschliessung um 90° gedreht werden. Dies kann z. B. durch zwei parallel angeordnete schmale Förderbänder erreicht werden, die mit einer bestimmten Geschwindigkeitsdifferenz betrieben werden. Damit können die Produkte um einen bestimmten Winkel vorgedreht werden. Anschliessend werden die vorgedrehten Produkte mit einer angetriebenen Seitenführung längs ausgerichtet. Diese Seitenführung ist ein um 90° aufgestelltes Förderband, das in einer bestimmten Schräglage zur Förderachse der Verpackungslinie ausgerichtet ist. Mit einer solchen Anordnung können die Produkte im Fluss längs ausgerichtet werden.

Im Weiteren müssen nun die Produkte in einen regelmässigen Abstand gebracht werden, um wie vorgängig erwähnt in die Nockenkette der Verpackungsmaschine gefördert werden zu können. Hierfür werden zumeist eine Vielzahl kurzer Bänder hintereinander angeordnet, um die Produkte zuerst durch eine stufenweise Reduktion der Geschwindigkeit dicht an dicht staudrucklos aufzureihen, um diese dann wieder mit einer kaskadenförmigen Erhöhung der Geschwindigkeit auf einen bestimmten Abstand zueinander zu bringen, der dann der Nockenteilung der Taktkette der Verpackungsmaschine entspricht.

Somit durchlaufen die reihenförmig von einer Produktionseinrichtung über die Förderanlage zugeführten Produkte auf dem Weg zur Weiterverarbeitung, insbesondere zur Verpackungsmaschine, verschiedene Funktionsstufen: Queraustragen, Lücken schliessen, Produkte um 90° drehen, längs ausrichten und regelmässig aufreihen, um dann mit dem richtigen Abstand zueinander und mit der richtigen Geschwindigkeit in die Taktkette der Weiterverarbeitungseinrichtung, insbesondere der Verpackungsmaschine, gefördert werden zu können.

In diesem Zusammenhang ergibt sich eine Anzahl von Nachteilen. Die Hauptnachteile ergeben sich aus der oft praktizierten Lückenschliessung mit einer bestimmten Anzahl von kurzen Bändern. Die Lücken können insbesondere bei höheren Verpackungsleistungen nur durch einen Überschub von Produkten geschlossen werden. Dabei wird die Lücke zwischen der vorauseilenden Reihe und der nacheilenden Reihe dadurch geschlossen, dass die nacheilende Reihe mittels kurzer Bänder auf eine höhere Geschwindigkeit beschleunigt wird, und dann mit diesem Geschwindigkeitsüberhang die Lücke zur vorauseilenden Reihe verkleinert werden kann. Vollends kann die Lücke jedoch nur geschlossen werden, indem die vorderen Produkte der nacheilenden Reihe auf die letzten Produkte der vorauseilenden Reihen aufgeschoben werden. Dadurch werden die Produkte in diesem Bereich auf Block zusammengeschoben, was beispielsweise für klebrige oder sonstige Produkte, die sich nicht berühren dürfen, ungeeignet ist. Ferner hat der auf die Weiterverarbeitungseinrichtung zulaufende Produktstrom keine regelmässige Produktteilung mehr, d. h. der Abstand der Produkte zueinander ist durch den Lückenschliessvorgang unregelmässig geworden. Das ist ein systematischer Nachteil, da diese Unregelmässigkeit nur durch eine Vielzahl zusätzlicher Bänder wieder ausgeglichen werden kann. Diese Bänder sind teuer und brauchen eine grössere Einbaulänge. Ausserdem sind die vielen Bandübergänge nachteilig für das Produkthandling und erhöhen massgeblich die Aufwendungen für Reinigung und Unterhalt der Produktionsanlage.

Es ist daher eine Aufgabe der vorliegenden Erfindung, eine Fördereinrichtung und ein Steuerverfahren für eine Produktförderanlage zum Fördern von stückgutartigen Produkten bereitzustellen, die eine zuverlässige und präzise Lückenschliessung ermöglichen, eine regelmässige Taktung von geförderten Produkten erlauben, für eine Vielzahl von Produkten geeignet ist und eine kontinuierliche und staudrucklose Förderung gewährleisten. Weiter soll eine Fördereinrichtung und eine Produktionsanlage bereitgestellt werden, die geringen Platzbedarf aufweisen, mit wenigen Fördereinheiten auskommen, eine flexible Förderung der Produkte erlauben und geringen Reinigungs- und Wartungsaufwand mit sich bringen.

### Zusammenfassung der Erfindung

Diese Aufgabe und weitere aus der nachfolgenden Beschreibung hervorgehende Aufgaben werden erfindungsgemäss durch eine Fördereinrichtung für eine Produktförderanlage zum Transportieren von stückgutartigen Produkten nach Anspruch 1 und ein Steuerverfahren für die Fördereinrichtung nach Anspruch 15 gelöst. Vorteilhafte Ausgestaltungen und unterschiedliche Ausführungsformen der Erfindung gehen aus den Unteransprüchen hervor.

Eine Fördereinrichtung für eine Produktförderanlage zum Fördern, bzw. Transportieren von stückgutartigen Produkten nach der vorliegenden Erfindung dient z. B. zur Beschickung einer Weiterverarbeitungseinrichtung mit den stückgutartigen Produkten, insbesondere einer oder mehrerer Verpackungseinrichtungen. Die Fördereinrichtung umfasst ein erstes Förderband, das beispielsweise als Queraustragsband zum Austragen von Produkten aus einem Zwischenspeicher dient, und ein an das erste Förderband anschliessende zweites Förderband, das zum Weiterfördern der Produkte an die Weiterverarbeitungseinrichtung dient. Die Produkte können dem ersten Förderband als Produktreihen zugeführt werden und werden von diesem an das zweite Förderband übertragen.

Erfindungsgemäss weist das erste Förderband einlaufseitig eine Aufgabeumlenkung und auslaufseitig eine erste Endumlenkung auf, die in Förderrichtung verschieblich gelagert ist, und das zweite Förderband weist einlaufseitig eine zweite Endumlenkung, die ebenfalls in Förderrichtung verschieblich gelagert ist, und auslaufseitig eine Austragsumlenkung auf. Die erste Endumlenkung und die zweite Endumlenkung schliessen in einem Übergabebereich zur Übergabe von Produkten aneinander an. Die erste Endumlenkung und die zweite Endumlenkung sind mittels eines Antriebs gemeinsam entlang der Förderrichtung verschiebbar, sodass eine fördernde Länge des ersten Förderbands und eine fördernde Länge des zweiten Förderbands während eines Transports von Produktreihen durch Verschieben der ersten und zweiten Endumlenkungen gegenläufig veränderlich ist. Vorteilhaft sind die erste und die zweite verschiebbare Endumlenkung durch eine Kopplungseinheit miteinander gekoppelt, so dass sie ohne weiteres in und entgegen der Förderrichtung gemeinsam verschoben werden können. Beispielsweise sind die Endumlenkungen mittels der Kopplungseinheit mechanisch gekoppelt. Die Kopplungseinheit kann beispielsweise durch eine Kopplung mit dem Antrieb gegeben sein. Vorzugsweise sind die Aufgabeumlenkung des ersten Förderbands und die Austragsumlenkung des zweiten Förderbands relative zur Förderrichtung im Wesentlichen feststehend sind. Damit wird eine fördernde Länge der Förderbänder durch die Verschiebung der Endumlenkungen bestimmt. Es ist zu beachten, dass eine Länge eines um die Umlenkungen umlaufenden Bandes jedes Förderband natürlich gleichbleibt, obgleich sich die fördernde Länge der Förderbänder ändert. Die fördernde Länge kann als diejenige Länge der Förderbänder dienen, die zum Transport von Produkten zur Verfügung steht, und als Obertrum bezeichnet werden kann.

Die Fördereinrichtung nach der Erfindung gewährleistet eine kontinuierliche Übergabe von Produkten an das zweite Förderband und ermöglicht somit ein lückenloses und taktgetreues Fördern von Produkten zu Weiterverarbeitungseinrichtung einer Produktionsanlage. Es ist wichtig anzumerken, dass, die Fördereinrichtung auch als Speicher verwendet werden kann. Zu diesem Zweck werden die Länge des ersten Förderbandes und die Länge des zweiten Förderbandes vorteilhaft gross gewählt, so dass die Speicherkapazität gross ist.

Erfindungsgemäss weist die Fördereinrichtung ausserdem längliche Stützelemente auf, mit welchen das erste Förderband und das zweite Förderband zumindest teilweise zwischen der Aufgabeumlenkung und der Austragsumlenkung gestützt werden. Damit können das erste Förderband und das zweite Förderband, auf den Stützelementen aufliegen und wird unmittelbar abgestützt. Dies ist besonders vorteilhaft, wenn das erste und/oder das zweite Förderband eine grosse Förderlänge aufweisen, da die Bänder sonst durchhängen können.

In einer Ausführungsvariante der Fördereinrichtung nach der Erfindung weist das erste Förderband eine erste Bandschlaufe mit der ersten Endumlenkung und eine weitere Bandschlaufe für einen Bandüberschuss des ersten Förderbands auf. Die erste Bandschlaufe bildet eine obere Schlaufenlage und eine untere Schlaufenlage aus, wobei die obere Schlaufenlage als Obertrum des ersten Förderbands dient. Das zweite Förderband weist eine zweite Bandschlaufe mit der zweiten Endumlenkung und noch eine weitere Bandschlaufe für einen Bandüberschuss des zweiten Förderbands auf. Analog der ersten Bandschlaufe dient eine obere Schlaufenlage der zweiten Bandschlaufe als Obertrum des zweiten Förderbands. Eine Spannvorrichtung ist zum Spannen des ersten und zweiten Förderbands vorgesehen. Vorteilhafterweise ragen die länglichen Stützelemente in die Bandschlaufen zwischen der oberen Schlaufenlage und der unteren Schlaufenlage zum Stützen der oberen Schlaufenlagen hinein.

Bei einer bevorzugten Ausführungsvariante der Fördereinrichtung nach der Erfindung weist das erste Förderband eine erste ortsfeste Zwischenumlenkung auf, mittels welcher das erste Förderband in eine obenliegende erste Bandschlaufe mit der verschieblich gelagerten ersten Endumlenkung und eine erste untere Bandschlaufe mit einer verschieblich gelagerten ersten unteren Endumlenkung unterteilt ist. Das erste Förderband ist somit an einem Ende mit der Aufgabeumlenkung und an einem gegenüberliegenden Ende mit den beiden ersten Endumlenkungen ausgebildet. Das Band läuft von der Aufgabeumlenkung zur obenliegenden ersten Endumlenkung, zur ersten Zwischenumlenkung, zur ersten unteren Endumlenkung und von dort zurück zur Aufgabeumlenkung. Das Obertrum des ersten Förderbands ist zur Förderung von Produkten an der obenliegenden ersten Bandschlaufe vorgesehen. Das zweite Förderband weist eine zweite ortsfeste Zwischenumlenkung auf, mittels welcher eine obenliegende zweite Bandschlaufe mit der verschieblich gelagerten zweiten Endumlenkung und eine zweite untere Bandschlaufe mit einer verschieblich gelagerte zweiten unteren Endumlenkung unterteilt ist. Das zweite Förderband ist somit an einem Ende mit den beiden zweiten Endumlenkungen und an einem gegenüberliegenden Ende mit der Austragsumlenkung ausgebildet. Das Band läuft von der obenliegenden zweiten Endumlenkung, zur Austragsumlenkung, zur zweiten unteren Endumlenkung, zur zweiten Zwischenumlenkung und von dort zurück zur obenliegenden zweiten Endumlenkung. Das Obertrum des zweiten Förderbands ist an der obenliegenden zweiten Bandschlaufe vorgesehen und schliesst sich in dem Übergabebereich zur Übergabe von Produkten an das Obertrum der ersten oberen Bandschlaufe an. Die unteren Bandschlaufen können zur Aufnahme eines Bandüberschuss der Förderbänder dienen.

In einer Ausführungsvariante der Fördereinrichtung nach der Erfindung sind die obenliegenden Endumlenkungen durch eine verschiebbar angeordnete obere Kopplungseinheit und die unteren Endumlenkungen sind durch eine verschiebbar angeordnete untere Kopplungseinheit jeweils miteinander gekoppelt. In einer einfachen Ausführung sind die Kopplungseinheiten z. B. als mechanische Kopplungen der jeweiligen Endumlenkungen vorgesehen, die vorteilhaft durch eine Kopplung mit dem Antrieb gebildet werden kann. Vorteilhaft bilden die sich gegenüberliegenden obenliegenden Bandschlaufen eine Doppel-Pullnose-Anordnung zur Übergabe von Produkten, wobei die oberen Endumlenkungen vorzugsweise auf gleicher Höhe ausgebildet sind und nur ein geringer Abstand zwischen der ersten und der zweiten Bandschlaufe besteht.

Die obere Kopplungseinheit und die untere Kopplungseinheit sind zueinander gegenläufig mittels eines Antriebs verschiebbar, womit sich auch die oberen Endumlenkungen und die unteren Endumlenkungen gegenläufig verschieben. Dadurch ist eine Länge der obenliegenden ersten Bandschlaufe und eine Länge der obenliegenden zweiten Bandschlaufe während eines Transports von Produktreihen durch Verschieben der Endumlenkungen mittels der Kopplungseinheiten veränderlich. Die Kopplungseinheiten, bzw. die Endumlenkungen, sind vorteilhaft in Förderrichtung parallel verschieblich gelagert, so dass eine Verschiebung der Kopplungseinheit einer Verlängerung, bzw. Verkürzung der Bandschlaufen entspricht. Die obere und untere Kopplungseinheit, bzw. die oberen und unteren Endumlenkungen, sind derart gegenläufig, dass sich die obere Einheit in Förderrichtung bewegt während sich die untere Einheit entgegen der Förderrichtung bewegt und umgekehrt. Das heisst, während sich die obere Bandschlaufe verlängert, wird die untere Bandschlaufe verkürzt und umgekehrt. Dadurch kann das Förderband gespannt bleiben. Ein Bandüberschuss, der bei einem verkürzen der oberen Bandschlaufe entsteht, wird vorteilhaft von den unteren Bandschlaufen aufgenommen.

Die Fördereinrichtung nach der Erfindung erlaubt eine schnelle und flexible Schliessung von Lücken in der Produktzufuhr zu Weiterverarbeitungseinrichtungen, die z. B. durch einen Stillstand des ersten Förderbands während der Aufnahme einer Produktreihe und gleichzeitiger Weiterförderung von Produkten auf dem zweiten Förderband entstehen. Durch die Anpassung der Förderbandlängen, bzw. der Obertrumlängen, des ersten und zweiten Förderbands kann die auf dem ersten Förderband nacheilende Produktreihe in vorbestimmtem Abstand an die vorauseilende Produktreihe auf dem zweiten Förderband angereiht werden. Damit können die Produkte der Produktreihen z. B. in gleichem Abstand zueinander weitergefördert werden, ohne dass eine Lücke zwischen den Produktreihen entsteht. Zusammengefasst wird hierfür das zweite Förderband, insbesondere dessen obere Bandschlaufe verkürzt, wobei keine Verminderung der Fördergeschwindigkeit von vorauseilenden Produkten erforderlich ist, und das erste Förderband, insbesondere dessen obere Bandschlaufe wird verlängert, um dem zweiten Förderband zu folgen, wobei die Fördergeschwindigkeit von nacheilenden Produkten auf dem ersten Förderband erhöht wird, um an die vorauseilenden Produkte auf dem zweiten Förderband anzuschliessen.

Hierfür ist erfindungsgemäss ein Steuerverfahren für die Fördereinrichtung zum Transportieren von stückgutartigen Produkten und/oder für eine Produktionsanlage mit einer solchen Fördereinrichtung vorgesehen. Eine Steuereinrichtung zur Steuerung eines oder mehrerer Antriebe für die verschieblich gelagerten Endumlenkungen, Kopplungseinheiten der Endumlenkungen, das erste Förderband und/oder das zweite Förderband ist derart ausgelegt, dass eine Verschiebegeschwindigkeit der verschieblich gelagerten Endumlenkungen und/oder der Kopplungseinheiten, eine Fördergeschwindigkeit des ersten Förderbands und/oder eine Fördergeschwindigkeit des zweiten Förderbands derart eingestellt wird, dass sich die fördernde Länge des ersten Förderbands, bzw. der ersten Bandschlaufe, und die fördernde Länge des zweiten Förderbands, bzw. der zweiten Bandschlaufe, während eines Transports von Produktreihen derart ändert, dass sich ein vorderstes Produkt auf dem ersten Förderband an ein letztes Produkt auf dem zweiten Förderband gemäss einer auf dem zweiten Förderband vorliegenden Produkttaktung anschliesst. Es entsteht somit ein lückenloses Anschliessen von Produkten, bei dem eine Übergabe von Produkten von dem ersten Förderband an das zweite Förderband Produkte derart erfolgt, dass Produkte auf dem zweiten Förderband in ein einer vorbestimmten Taktung vorliegen und diese Taktung von nachfolgend übergebenen Produkten beibehalten werden kann. Das heisst, die Produkte können an das zweite Förderband mit einem Abstand anschliessen, der einem Taktabstand von Produkten der Produktreihe auf dem zweiten Förderband entspricht.

In einer Variante der Fördereinrichtung nach der Erfindung ist die fördernde Länge, bzw. das Obertrum des ersten Förderbands in einen Übernahmebereich, der zur Übernahme von Produktreihen aus dem Zwischenspeicher bestimmt ist und eine feststehende Länge aufweist, und einen Austragsbereich in Form einer Bandschlaufe unterteilt. Vorteilhaft entspricht die feststehende Länge des Übernahmebereichs wenigstens einer Breite einer Zwischenspeicherablage eines Zwischenspeichers. Der Austragsbereich weist eine veränderliche Länge beispielsweise gemäss der Länge der ersten Bandschlaufe mit der erste Endumlenkung auf. Die Länge des Übernahmebereichs wird beispielsweise durch den Abstand zwischen der Aufgabeumlenkung und der ersten Zwischenumlenkung bestimmt.

Die Fördereinrichtung nach der Erfindung weist eine kompakte Bauweise mit einer kurzen Baulänge und eine einfache Wartung auf, da weniger herkömmlicherweise zur Lückenschliessung von transportierten Produkten erforderlichen Bandeinheiten benötigt werden. Die Fördereinrichtung ist vorteilhaft auch für klebrige oder zerbrechliche Produkte geeignet, die sich nicht berühren sollen, da sie kontaktlos an die Weiterverarbeitungseinrichtung, insbesondere an Verpackungsmaschen, übergeben werden können. Die Steuerung einer Produktionsanlage umfassend einer erfinderischen Fördereinrichtung wird vereinfacht, da weniger Fördereinheiten aufeinander abgestimmt werden müssen, so dass Ausfallzeiten verringert werden können.

In einer Ausführungsvariante der Fördereinrichtung nach der vorliegenden Erfindung sind die obere Kopplungseinheit, die untere Kopplungseinheit und die länglichen Stützelemente verschieblich an einer Führung gelagert, die sich entlang des ersten Förderbands über den Übergabebereich und entlang des zweiten Förderbands erstreckt. Vorteilhaft erstreckt sich die Führung zwischen den oberen und den unteren Bandschlaufen des ersten und zweiten Förderbands, sodass die Führung für beide Kopplungseinheiten gleichermassen gut zugänglich ist. Vorzugsweise verlaufen die oberen Bandschlaufen parallel zu den zugehörigen unteren Bandschlaufen und die Führung verläuft parallel dazwischen. Dabei kann z. B. die obere Kopplungseinheit auf einer Oberseite oder einer ersten Längsseite der Führung gelagert sein und die untere Kopplungseinheit kann an einer Unterseite oder einer zweiten der ersten gegenüberliegenden Längsseite gelagert sein. Im Wesentlichen kann sich die Führung von der ersten Zwischenumlenkung zur zweiten Zwischenumlenkung erstrecken, um einen grösstmöglichen Verschiebeweg für die Endumlenkungen zu erlauben. Die Kopplungseinheiten sind beispielsweise als Schlitten ausgebildet, die auf der Führung laufen. Die Führung unterstützt die verschiebliche Lagerung der Kopplungseinheit und der Stützelemente z. B. durch eine Schienenführung. Die Kopplungseinheiten, bzw. Schlitten, und die Stützelemente können gleitend gelagert sein, können eine Kugel- oder Stablagerung aufweisen, oder in anderer Weise linearverschieblich gelagert sein. Die Endumlenkungen können in oder an den Kopplungseinheiten drehbar gelagert sein, beispielsweise können die Achsen der Endumlenkungen an gegenüberliegenden Seiten eines Schlittens gelagert sein.

In einer Ausführungsvariante der Fördereinrichtung ist die Führung als Teil einer Tragstruktur ausgebildet, die eine vertikale Trägerplatte und eine davon abstehende horizontale Trägerplatte aufweist. Die vertikale Trägerplatte kann z. B. zur Lagerung der Aufgabeumlenkung, der Austragsumlenkung, der Zwischenumlenkungen und von Antrieben dienen. Die horizontale Trägerplatte kann vorteilhaft die Führung für die verschiebbaren Kopplungseinheiten bilden. Die Tragstruktur kann z. B. als ein Chassis ausgebildet sein, das aus Metallelementen zusammengesetzt ist. Die Tragstruktur ermöglicht eine Balkonbauweise zur Anordnung der Förderbandschlaufen, Umlenkungen, Kopplungseinheiten, Stützelementen und Antriebe derart, dass alle diese Bauelemente leicht von verschiedenen Seiten zugänglich sind und eine einfache Reinigung und Wartung möglich ist.

In einer weiteren Ausführungsvariante der Fördereinrichtung nach der Erfindung ist der Antrieb für die Endumlenkungen, respektive die Kopplungseinheiten, und/oder die Stützelemente als ein entlang der Führung für die Endumlenkungen, bzw. die Kopplungseinheiten, angeordneter umlaufender Zugmittelantrieb ausgebildet. Das Zugmittel des Antriebs ist beispielsweise in Form einer Kette oder eines Zahnriemen vorgesehen. Das Zugmittel erstreckt sich vorzugsweise von einer ersten Zwischenumlenkung des ersten Förderbands zu einer zweiten Zwischenumlenkung des zweiten Förderbands. Das Zugmittel ist mittels Zugmittelumlenkungen vorteilhaft derart um die sich gegenüberliegenden Zwischenumlenkungen geführt, dass es zwischen den Schlaufenlagen der oberen und unteren Bandschlaufen zu liegen kommt. Die Führung für die Endumlenkung, bzw. Kopplungseinheiten, und die Stützelemente kann zwischen dem Zugmittel liegen, so dass die obere Kopplungseinheit an einen oberen Zugmittelabschnitt und die untere Kopplungseinheit an einen unteren Zugmittelabschnitt angekoppelt werden kann. Dieser Antrieb ermöglicht ein präzises gegenläufiges Verschieben der Kopplungseinheit, und somit der Endumlenkungen der Förderbänder, sowie der Stützelemente. Da die obere Kopplungseinheit und die untere Kopplungseinheit von demselben Zugmittel verschoben werden, ist deren Verschiebelänge identisch.

Grundsätzlich soll der Obertrum eines Förderbands, auf dem das Produkt gefördert wird, von unten unterstützt werden, damit dieser nicht durchhängt. Das ist für den Bandlauf und das Produkthandling wichtig, insbesondere bei hohen Beschleunigungen und Fördergeschwindigkeiten. Da aber im Bereich der oberen Bandschlaufen, bzw. der oberen Kopplungseinheit, keine konventionelle ortsfeste Bandunterstützung in Form eines Bandlaufblechs angeordnet werden kann, kommt eine erfindungsgemässe Bandunterstützung zur Anwendung.

Hierfür ist in einer vorteilhaften Ausführungsvariante das umlaufende Zugmittel des Zugmittelantrieb derart geführt, dass es im Wesentlichen parallel zu der ersten und zweiten oberen Bandschlaufe geführt ist. Von dem Zugmittel stehen vorteilhaft die länglichen Stützelemente zum Stützen der oberen Schlaufenlage ab, um die Last der Produkte abzustützen und eine einheitlich ebene Förderfläche zu schaffen. Die Stützelemente ragen in die Bandschlaufen zwischen eine obere Schlaufenlage und eine untere Schlaufenlage hinein. Damit kann die obere Schlaufenlage, welche die Produkte trägt, auf den Stützelementen aufliegen und wird unmittelbar abgestützt. Vorzugsweise ist das Zugmittel seitlich der Förderbänder geführt, so dass es mittels Zugmittelumlenkungen um die Zwischenumlenkungen der Förderbänder geführt werden kann. Beispielsweise ist eine Zugmittelführung an der vertikalen Trägerplatte der Tragstruktur angeordnet. Die Stützelemente können beispielsweise an nur einem Ende von dem Zugmittel getragen werden, wie es etwa bei der Balkonbauweise der Fördereinrichtung naheliegt. Alternativ kann der Zugmittelantrieb zwei gegenüberliegende und synchron angetriebene Zugmittel umfassen, die an zwei den Förderbändern gegenüberliegenden Seiten geführt werden und mittels der Stützelemente verbunden sind. In diesem Fall werden die Stützelemente an ihren beiden Enden unterstützt. Sollte das erste Förderband einen Übernahmebereich mit fixer Länge aufweisen, wie oben beschrieben, kann unter dem Übernahmebereich z. B. ein Stützblech vorgesehen sein, welches in diesem Bereich die Funktion der Stützelemente übernimmt.

Die Stützelemente des Zugmittelantriebs unterstützen in einem nützlichen Abstand zueinander den Obertrum der Förderbänder auf der ganzen Breite. Diese Bandunterstützung ist somit über den ganzen Hub der Endumlenkungen aktiv. Somit können Fördereinrichtungen mit grosser Baulänge und einem entsprechend grossen Hub der Endumlenkungen, respektive der Kopplungseinheiten, sehr effektiv als Bandpuffer eingesetzt werden.

In noch einer Ausführungsvariante der Fördereinrichtung nach der Erfindung sind neben dem ersten Antrieb für die Kopplungseinheiten und die Stützelemente ein zweiter Antrieb für das erste Förderband und ein dritter Antrieb für das zweite Förderband vorgesehen, welche jeweils das erste Förderband und das zweite Förderband unabhängig voneinander antreiben. Die Antriebe sind vorzugsweise als Servoantriebe ausgebildet. Sie können beispielsweise gemeinsam mit der Aufgabeumlenkung und der Austragsumlenkung an der Tragstruktur der Fördereinrichtung positioniert sein, um die Förderbänder an den Umlenkungen anzutreiben.

Die drei Antriebe werden von der Steuereinrichtung der Fördereinrichtung gesteuert, um eine taktgetreue lückenlose Produktübergabe zu gewährleisten, wie oben erläutert. Die Steuereinrichtung ist beispielsweise als lokale Recheneinheit mit einer Datenverarbeitungseinheit, einem Datensender/-empfänger, einem Signalgenerator und einer Sensorik ausgebildet. Die Sensorik umfasst Sensoren zum Erfassen von Messdaten zur Positionsbestimmung, Geschwindigkeitsbestimmung, Taktabstand, etc. der Förderbänder und Produkte der Fördereinrichtung. Die Steuereinrichtung empfängt die Messdaten der Sensorik, generiert ein Steuersignal zur Steuerung der Antriebe und sendet dieses Steuersignal in die Antriebe. Dabei übernimmt die Steuereinrichtung die Steuerung des ersten Antriebs für die Endumlenkungen, respektive der Kopplungseinheiten bzgl. deren Verschiebegeschwindigkeit in Abhängigkeit einer Produktgeschwindigkeit auf dem zweiten Förderband, d.h. in Abhängigkeit der Geschwindigkeit des zweiten Förderbands. Somit kann die fördernde Länge, bzw. die Länge der oberen Bandschlaufe, an die Produktgeschwindigkeit auf dem zweiten Förderband angepasst werden. Ferner kann die Steuereinrichtung zur Steuerung des zweiten Antriebs, der für das erste Förderband vorgesehen ist, bezüglich einer Bandgeschwindigkeit des ersten Förderbands in Abhängigkeit einer Verschiebegeschwindigkeit der Endumlenkungen, bzw. der Kopplungseinheiten steuern. Somit kann die Geschwindigkeit des ersten Förderbands, das eine nacheilende Produktreihe trägt, derart angepasst werden, dass ein vorderstes Produkt dieser Reihe gemäss einer auf dem zweiten Förderband vorliegenden Produkttaktung auf das zweite Förderband übergeben wird.

Bei einer Ausführungsvariante der Fördereinrichtung ist das zweite Förderband vorteilhaft als Doppelband mit einem ersten Parallelband und einem daneben angeordneten zweiten Parallelband ausgebildet. Die Parallelbänder sind unabhängig voneinander mittels getrennter Antriebe antreibbar. Demnach treibt der dritte Antrieb beispielsweise das erste Parallelband und ein vierter Antrieb treibt das zweite Parallelband an. Dank dem als Doppelband ausgebildeten zweiten Förderband können die Produkte gedreht werden.

Alle Antriebe der Fördereinrichtung können mit der Steuereinrichtung koordiniert werden. Vorteilhaft laufen die nebeneinander angeordneten Parallelbänder über dieselben Endumlenkungen, d.h. beispielsweise über die zweite obere Endumlenkung und die zweite untere Endumlenkung, und sind gemeinsam an Kopplungseinheiten angeschlossen. Das erste und das zweite Parallelband des Doppelbands werden daher identisch verkürzt oder verlängert, je nach Position der Endumlenkungen. Gleichzeitig können die Parallelbänder mit unterschiedlicher Geschwindigkeit angetrieben werden. Beispielweise wird das erste Parallelband relative zum zweiten Parallelband schneller angetrieben. Werden nun Produkte einer Produktreihe derart auf das Doppelband übergeben, das die Produkte mit einem Ende auf dem ersten Parallelband und einem gegenüberliegenden Ende auf dem zweiten Parallelband zu liegen kommen, wird das eine Produktende relative zum gegenüberliegenden Ende schneller transportiert und das Produkt wird auf dem zweiten Förderband gedreht. Die Fördereinrichtung mit dem Doppelband ermöglicht somit ein Verdrehen der Produkte.

In einer vorteilhaften Variante des Steuerverfahrens nach der Erfindung stellt die Steuereinrichtung die Verschiebegeschwindigkeit der verschieblich gelagerten Endumlenkungen und/oder der Kopplungseinheiten derart ein, dass ein erstes Produkt auf dem ersten Förderband einen konstanten vorgegebenen Abstand zur Endumlenkung des ersten Förderbands behält, während die Endumlenkungen und/oder die Kopplungseinheit vorgeschoben werden. Um den vorgegebenen Abstand zwischen dem ersten Produkt und der ersten Endumlenkung konstant zu halten, während die Endumlenkungen, bzw. deren Kopplungseinheit in Förderrichtung verfahren, wird die Geschwindigkeit des ersten Förderbandes entsprechend geregelt. Vorzugsweise liegt das erste Produkt unmittelbar vor der ersten Endumlenkung und behält diesen Abstand konstant bei. Um die nacheilende Produktreihe mit der vorauseilenden Reihe auf dem zweiten Förderband aufschliessen zu lassen, muss das erste Förderband schneller laufen als das zweite Förderband, um die Verlängerung des ersten Förderbands durch die Verschiebung der Endumlenkungen zu kompensieren.

Bei einer bevorzugten Variante des Verfahrens nach der Erfindung zur Steuerung einer Produktionsanlage wird eine Produktreihe aus einer Zwischenspeicherablage von dem ersten Förderband übernommen. Während die Produktreihe auf dem ersten Förderband in Richtung des zweiten Förderbands gefördert wird, werden die Endumlenkungen, bzw. die obere Kopplungseinheit, in Förderrichtung verschoben, sodass sich die fördernde Länge des ersten Förderbands, insbesondere der ersten oberen Bandschlaufe, vergrössert und die fördernde Länge des zweiten Förderbands, insbesondere der zweiten oberen Bandschlaufe, verringert. Die Endumlenkungen und/oder die Kopplungseinheit werden entgegen der Förderrichtung zur Übergabe der Produktreihe an das zweite Förderband zurückverschoben. Die Endumlenkungen, bzw. die obere Kopplungseinheit, sind dann entgegen der Förderrichtung zurückverschoben, um die nächste Produktreihe aus dem Zwischenspeicher zu übernehmen. Die Geschwindigkeiten der Förderbänder und der Endumlenkungen, bzw. der Kopplungseinheiten werden, wie oben beschrieben, von der Steuereinrichtung eingestellt. Die Übergabe der Produktreihe aus dem Zwischenspeicher an das erste Förderband kann ebenfalls von der Steuereinrichtung koordiniert werden. Das Verfahren ermöglicht ein kontinuierliches, lückenloses und staudruckloses Fördern der Produkte aus dem Zwischenspeicher an die Weiterverarbeitungseinrichtung, wodurch die Produktionskapazität der Produktionsanlage erhöht werden kann. Ferner wird durch die kontaktlose Übergabe der Produkte die Menge an Produktausschuss verringert.

Bei einer zusammenfassenden beispielhaften Anwendung der Fördereinrichtung und des Steuerverfahrens nach der Erfindung kommt eine Förderanlage mit einer Dreheinrichtung zum Drehen von Produkten zum Einsatz, die eine Doppel-Pullnose-Anordnung und ein Förderband mit einer Seitenführung zur Drehung der Produkte nutzt. Wie beschrieben besteht die Doppel-Pullnose-Anordnung aus zwei Förderbändern mit horizontal verschiebbaren Bandumlenkung, bzw. Endumlenkungen. Diese Endumlenkungen sind über Kopplungseinheiten mechanisch miteinander gekoppelt und mit einem Servomotor verschiebbar angetrieben. Dabei ist beim ersten Band die auslaufseitige Bandumlenkung verschiebbar ausgeführt und beim zweiten Band ist es die einlaufseitige Bandumlenkung. Diese beiden Bandumlenkungen sind zueinander entgegengesetzt angeordnet und in Förderrichtung und entgegen der Förderrichtung bewegbar. Das zweite Band der Doppel-Pullnose-Anordnung ist vorteilhafterweise als Doppelband ausgebildet. Das Doppelband besteht aus zwei Parallelbändern gleicher Länge, wobei die einlaufseitige Bandumlenkungen der Bänder mittels der Kopplungseinheit mechanisch gekoppelt und gemeinsam verschiebbar ausgeführt sind. Die Bandbreite der beiden Parallelbänder ist vorzugsweise identisch, kann jedoch auch unterschiedlich sein. Entlang der Symmetrieachse haben vorteilweise diese beiden Bänder einen Abstand zueinander von beispielsweise 10-25 mm. Beide Parallelbänder sind individuell mit einem Servomotor angetrieben.

Die Fördereinrichtung mit der Doppel-Pullnose-Anordnung und dem zweiten Förderband als Doppelband hat demnach vier Servoantriebe, einen Bandantrieb für das erste Förderband, zwei Antriebe für das Doppelband und einen Antrieb für die verschiebbaren Kopplungseinheit, bzw. Bandumlenkungen. Alle Antriebe sind beispielsweise als Servomotoren vorgesehen. Mit dieser Doppel-Pullnose-Anordnung ist es nun möglich, die Lücken zwischen den Produktreihen in der Zufuhr zu Verpackungsmaschinen zu schliessen, ohne dass die Produkte zusammengeschoben werden. Dazu wird die Fördereinrichtung im Auslauf eines Zwischenspeichers oder einer Queraustragestation quer zur Hauptförderrichtung angeordnet, wobei das erste Förderband der Doppel-Pullnose-Anordnung die Funktion des Austragsbands übernimmt.

Wird nun eine Produktreihe auf das erste Förderband der Doppel-Pullnose-Anordnung abgelegt oder aufgeschoben, so befindet sich die verschiebbare Bandumlenkung in ihrer in Förderrichtung hinteren Position und das erste Produkt der ausgeschobenen Reihe ist beispielsweise direkt vor der verschiebbaren ersten oberen Endumlenkung positioniert.

Danach wird die Produktreihe in Richtung einer Weiterverarbeitungseinrichtung, z. B. einer Verpackungslinie, ausgefahren und simultan wird auch die verschiebbare obere Kopplungseinheit mit den oberen Endumlenkungen in derselben Richtung synchronisiert zu einer vorderen Position bewegt. Dabei bleibt die Lage des ersten Produkts relativ zur verschiebbaren Bandumlenkung stabil und verändert sich nicht. Indem nun diese nacheilende Reihe der vorauseilenden Reihe auf dem zweiten Förderband mit höherer Geschwindigkeit entgegenfährt, kann die Lücke auf kurzem Weg komplett zugefahren werden. Die vorauseilende Reihe befindet sich auf dem zweiten Förderband der Doppel-Pullnose-Anordnung und hat eine konstante Geschwindigkeit. Die Steuerung der Doppel-Pullnose-Anordnung kann die Position des letzten Produkts der vorauseilenden Reihe sowie die Position des ersten Produkts der nacheilenden Reihe z. B. durch ein Resolversignal der betreffenden servogesteuerten Bandantriebe inkrementell erfassen und dadurch die nacheilende Reihe so auf die vorauseilende Reihe einbremsen, dass die Lücke komplett geschlossen ist und zudem noch Abstand und Geschwindigkeit der beiden betreffenden Produkte abgeglichen sind.

In dieser vorderen Position der verschiebbaren Kopplungseinheiten ist die Geschwindigkeit der Kopplungseinheiten gleich Null und die Endumlenkungen somit gestoppt. Die Endumlenkungen werden aber sofort wieder entgegen der Förderrichtung in ihre hintere Ausgangsstellung bewegt und zwar so schnell, dass sie zum Zeitpunkt des nächsten Ausschubs einer Produktreihe wieder Geschwindigkeit null hat und gestoppt ist. Während der Rückzugsbewegung der verschiebbaren Endumlenkungen wird die Produktreihe auf dem zweiten Förderband in Richtung Verpackungsmaschine ausgefahren. Dabei werden die Produkte über den Übergabebereich zum Doppelband transferiert. Die Produkte werden bei diesem Bandübergang so weit auseinandergezogen, sodass deren Abstand zueinander ausreicht, um sie anschliessend auf den Parallelbändern des Doppelbandes um mindestens 45° vorzudrehen. Hierfür werden die beiden Parallelbänder mit der entsprechenden Geschwindigkeitsdifferenz betrieben.

In wiederum einer weiteren Ausführungsvariante einer Fördereinrichtung nach der Erfindung ist die Fördereinrichtung einlaufseitig schwenkbar ausgebildet, wobei die Schwenkachse mit der Drehachse der Austragsumlenkung fluchtend ist. Dank dieser Ausführungsform kann die Fördereinrichtung an verschiedene übereinander angeordnete Zuführbänder angeschlossen werden und von diesen Produktreihen übernehmen. Dadurch wird eine schnellere Beschickung der Fördereinrichtung mit Produktreihen möglich und die Förderanlage der Produktionsanlage kann effektive ausgelastet werden.

Mit der Fördereinrichtung und dem Steuerverfahren nach der Erfindung können auf kurzer Einbaulänge Produktreihen ausgetragen werden, die Lücken werden staudrucklos und ohne Überschub geschlossen und die Produkte können vorgedreht und mit einem regelmässigen Abstand zueinander an die nachgeschalteten Bänder übergeben werden. Dies wird produktschonend erreicht mit nur einem Bandübergang. Ausserdem werden die regelmässige Lage und die Orientierung der Produkte nicht gestört. Dadurch kann nach der Längsausrichtung die vorhandene Regelmässigkeit als Basis genutzt werden, um mit einem Minimum an kurzen Bändern, ein effektives Pitching in die virtuelle Taktkette der Verpackungsmaschine zu erreichen, falls erforderlich. Mit dieser Fördereinrichtung ist es auch möglich, klebrige oder sonstige Produkte, die sich nicht berühren dürfen, kontaktlos an die Verpackungsmaschine zu übergeben.

Die Erfindung wird im Folgenden anhand der Figuren dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1a: eine erste Produktionsanlage mit einer Fördereinrichtung nach der Erfindung in einer Förderposition, bei der ein erstes Förderband der Fördereinrichtung zur Übernahme einer Produktreihe bereit ist,
- Fig. 1b: die Produktionsanlage mit der Fördereinrichtung in einer Förderposition, bei der eine Produktreihe von dem ersten Förderband übernommen ist,
- Fig. 1c: die Produktionsanlage mit der Fördereinrichtung in einer Förderposition, in der eine Übergabe der Produktreihe an ein zweites Förderband vorbereitet wird,
- Fig. 1d: die Produktionsanlage mit der Fördereinrichtung in einer Förderposition, in der die Übergabe der Produktreihe an das zweite Förderband erfolgt,
- Fig. 1e: die Produktionsanlage mit der Fördereinrichtung in einer Förderposition, in der die Übergabe der Produktreihe an das zweite Förderband abgeschlossen ist,
- Fig. 2: eine drei-dimensionale Schnittansicht einer Ausführungsvariante einer Fördereinrichtung nach der vorliegenden Erfindung,
- Fig. 3a: einen Ausschnitt eines mittleren Abschnitts der Fördereinrichtung aus Figur 2,
- Fig. 3b: einen Ausschnitt eines einlaufseitigen Abschnitts der Fördereinrichtung aus Figur 2,
- Fig. 3c: einen Ausschnitt eines auslaufseitigen Abschnitts der Fördereinrichtung aus Figur 2,
- Fig. 3d: einen drei-dimensionale Darstellung Fördereinrichtung aus Figur 2 ohne umlaufende Bänder des ersten und zweiten Förderbands,
- Fig. 4: eine zweite Produktionsanlage mit einer Fördereinrichtung nach der Erfindung mit einem gebogenen Förderband mit einer Seitenführung zur Drehung der Produkte,
- Fig. 5: eine dritte Produktionsanlage mit einer Fördereinrichtung nach der Erfindung mit zwei übereinander angeordneten Queraustragsbändern mit einer Vertikalweiche an der Fördereinrichtung, und
- Fig. 6: eine vierte Produktionsanlage mit einer Fördereinrichtung nach der Erfindung mit zwei Verpackungslinien.

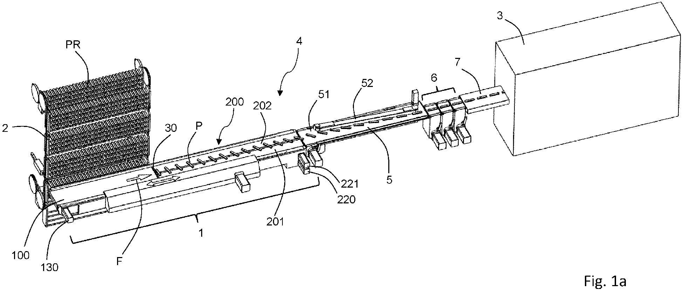

In den Figuren 1a bis 1e ist eine erste Produktionsanlage mit einer Fördereinrichtung 1 zum Transportieren von stückgutartigen Produkten in einer Förderrichtung F gemäss der Erfindung gezeigt. Die Produktionsanlage weist die Fördereinrichtung 1, einen Zwischenspeicher 2 mit einer Vielzahl darin gelagerter Produktreihen PR, eine Weiterverarbeitungseinrichtung 3 zum Weiterverarbeiten der Produkte und eine Förderanlage 4 auf. Die Förderanlage 4 umfasst zwischen dem Zwischenspeicher 2 und der Weiterverarbeitungseinrichtung 3 die Fördereinrichtung 1, ein Förderband mit einer Seitenführung zur Drehung der Produkte 5, drei Pitching-Bänder 6 und Einlaufband 7 zur Weiterverarbeitungseinrichtung 3. Eine Fördereinrichtung kann über Zuführbänder (nicht gezeigt) an den Zwischenspeicher 2 angeschlossen sein und diesen mit Produktreihen befüllen, wie es aus dem Stand der Technik bekannt ist.

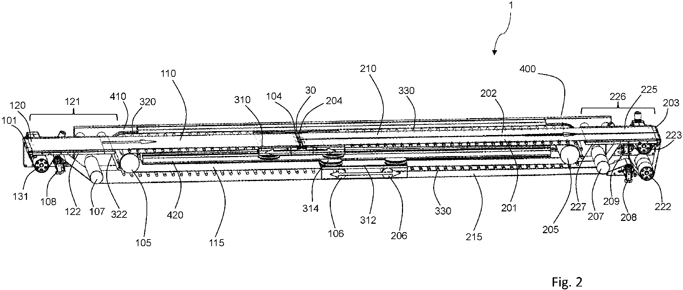

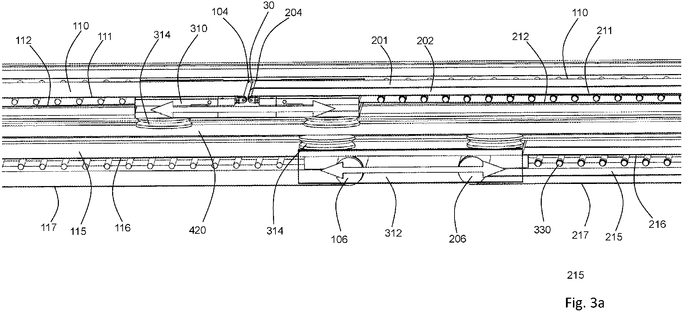

Die Fördereinrichtung 1 wird anhand von Figur 2 sowie den Figuren 3a bis 3d näher beschrieben. Die Fördereinrichtung 1 weist ein erstes umlaufendes Förderband 100 und ein an dieses anschliessendes zweites umlaufendes Förderband 200 auf. Das zweite Förderband ist in dieser Ausführungsform als Doppelband mit einem ersten Parallelband 201 und einem zweiten Parallelband 202 ausgebildet. Das erste Förderband 100 und das zweite Förderband 200 mit den Parallelbändern 201 und 202 sind horizontal in einer Ebene ausgerichtet. Das zweite Förderband 200 schliesst in einem Übergabebereich 30 unmittelbar an das erste Förderband 100 an, wie in Figur 3a ersichtlich. Der Abstand zwischen den Bändern 201 und 202 beträgt beispielsweise 10-25 mm und ist somit klein genug, dass keine Produkte zwischen den Bändern durchfallen können.

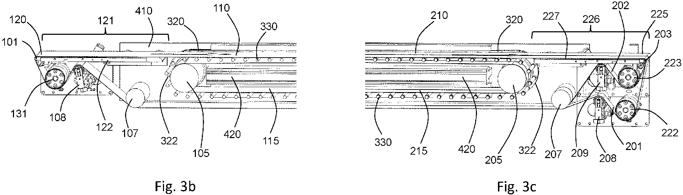

Das erste umlaufende Förderband 100 verläuft über eine einlaufseitige Aufgabeumlenkung 101, eine auslaufseitige erste obere Endumlenkung 104, eine dazu horizontal beabstandete Zwischenumlenkung 105, eine erste untere Endumlenkung 106 und zurück zur Aufgabeumlenkung 101. Weiter ist eine Führungsrolle 107 und eine Spannrolle 108 vorgesehen, wie im Detail in Figur 3b ersichtlich. Die Zwischenumlenkung 105 ist zwischen einem vorlaufenden oberen Bandabschnitt und einem rücklaufenden unteren Bandabschnitt derart angerordnet, dass das erste Förderband 100 in eine erste obere Bandschlaufe 110 und eine erste untere Bandschlaufe 115 unterteilt ist. Die erste obere Bandschlaufe 110 wird von einer oberen Schlaufenlage 111 und einer unteren Schlaufenlage 112 gebildet. Die erste untere Bandschlaufe 115 wird von einer oberen Schlaufenlage 116 und einer unteren Schlaufenlage 117 gebildet. Das Obertrum des ersten Förderbands 100 erstreckt sich zwischen der in Förderrichtung im Wesentlichen feststehenden Aufgabeumlenkung 101 und der verschieblich gelagerten ersten oberen Endumlenkung 104. Die obere Schlaufenlage 111 ist somit ein Teil des Obertrums des ersten Förderbands 100, dessen Länge durch Verschieben der ersten oberen Endumlenkung 104 verändert werden kann. Der Teil des Förderbands 100, der sich von der Aufgabeumlenkung 101 bis zur Zwischenumlenkung 105 kann als Übernahmeschlaufe 120 bezeichnet werden, die einen Übernahmebereich 121 zum Aufnehmen von Produkten aufweist. Im Übernahmebereich 121 ist unterhalb des Förderbands ein einlaufseitiges Unterstützungsblech 122 vorgesehen.

Das zweite umlaufende Förderband 200, das heisst das erste Parallelband 201 und das zweite Parallelband 202, verläuft, bzw. verlaufen, von einer einlaufseitigen zweiten obere Endumlenkung 204 über eine Austragsumlenkung 203 zu einer zweiten unteren Endumlenkung 206, über eine dazu horizontal beabstandete Zwischenumlenkung 205 und zurück zur zweiten obere Endumlenkung 204. Weiter ist eine gemeinsame Führungsrolle 207 und eine erste Spannrolle 208 für das erste Parallelband 201 und eine Spannrolle 209 für das zweite Parallelband 202 vorgesehen, wie im Detail in Figur 3c ersichtlich. Die zweite Zwischenumlenkung 205 ist analog der ersten Zwischenumlenkung 105 im zweiten Förderband 200 derart angerordnet, dass eine zweite obere Bandschlaufe 210 und eine zweite untere Bandschlaufe 215 für das erste Parallelband 201 und das zweite Parallelband 202 ausgebildet werden. Die zweite obere Bandschlaufe 210 wird bei den Parallelbändern jeweils von einer oberen Schlaufenlage 211 und einer unteren Schlaufenlage 212 gebildet. Die zweite untere Bandschlaufe 215 wird von einer oberen Schlaufenlage 216 und einer unteren Schlaufenlage 217 gebildet. Die umlaufenden Parallelbänder 201 und 202 weisen die gleiche Gesamtlänge auf, so dass dieselben Umlenkungen zur Führung verwendet werden können. Das Obertrum der ersten und zweiten Parallelbänder 201 und 202 des zweiten Förderbands 200 erstreckt sich zwischen der verschieblich gelagerten zweiten oberen Endumlenkung 204 und der feststehenden Austragsumlenkung 203. Die obere Schlaufenlage 211 ist somit ein Teil des Obertrums der Parallelbänder 201 und 202, dessen fördernde Länge durch Verschiebung der zweiten oberen Endumlenkung 204 verändert werden kann. Der Teil des Förderbands 200, der sich von der Zwischenumlenkung 205 zur Austragsumlenkung 203 erstreckt kann als Austragsschlaufe 225 bezeichnet werden, die einen Ausfuhrbereich 226 zum Austragen von Produkten aufweist. Im Ausfuhrbereich 226 ist unterhalb des Förderbands ein auslaufseitiges Unterstützungsblech 227 vorgesehen.

Die erste obere Bandschlaufe 110 und die zweite obere Bandschlaufe 210 schliessen im Übergangsbereich aneinander an. Die erste unter Bandschlaufe 115 und die zweite untere Bandschlaufe 215 schliessen unterhalb der oberen Bandschlaufen ebenfalls aneinander an, wie in Figur 3a ersichtlich. Hierfür verlaufen die unteren und oberen Bandschlaufen parallel zueinander.

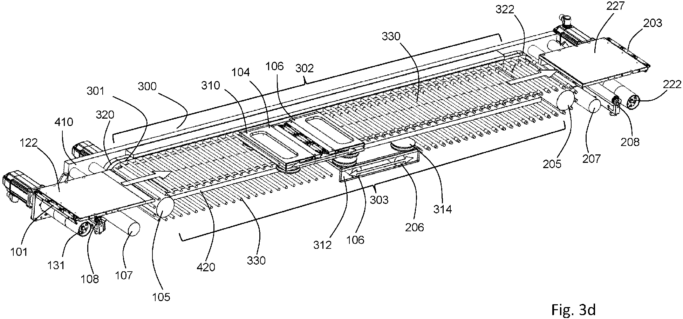

Das erste Förderband 100 wird durch einen Antrieb 130 angetrieben, der im Bereich der Aufgabeumlenkung 101 vorgesehen ist, wie in Figur 3d ersichtlich. Das erste Parallelband 201 wird durch einen Antrieb 220 im Bereich der ersten Spannrolle 208 und das zweite Parallelband 202 wird durch einen Antrieb 221 im Bereich der zweiten Spannrolle 209 angetrieben, wie in Figur 3c ersichtlich. Alle drei Bänder werden daher unabhängig voneinander angetrieben. Die Antriebe sind vorzugsweise als Servoantriebe vorgesehen. Die Fördereinrichtung weist eine Steuereinrichtung zur Steuerung der Antriebe resp. der Antriebsrolle auf. Die Antriebe werden dabei unabhängig voneinander gesteuert.

Erfindungsgemäss sind die obere Endumlenkung 104 und die untere Endumlenkung 106 des ersten Förderbands 100 sowie die obere Endumlenkung 204 und die untere Endumlenkung 206 des zweiten Förderbands 200 entlang der Förderrichtung verschieblich gelagert. Zum Verschieben der Endumlenkungen ist ein Zugmittelantrieb 300 mit einer umlaufenden Zugkette 301 als Zugmittel vorgesehen, die sich im Wesentlichen von der ersten Zwischenumlenkung 105 des ersten Förderbands 100 zur zweiten Zwischenumlenkung 205 des zweiten Förderbands 200 erstreckt und um diese Zwischenumlenkungen umgelenkt ist, wie in Figur 2 ersichtlich. Die Endumlenkungen können daher im Wesentlichen über eine Strecke mit der Länge des Abstands der Zwischenumlenkungen verschoben werden. Hierfür sind die Endumlenkungen mittels Kopplungseinheiten an den Zugmittelantrieb gekoppelt. Die erste obere Endumlenkung 104 und die zweite obere Endumlenkung 204 sind durch eine verschiebbar angeordnete obere Kopplungseinheit 310 und die erste untere Endumlenkung 106 und die zweite untere Endumlenkung 206 durch eine verschiebbar angeordnete untere Kopplungseinheit 312 miteinander gekoppelt, wie in Figur 3a und 3d ersichtlich. Die Kopplungseinheiten 310 und 312 bilden eine mechanische Kopplung des oberen Endumlenkungspaars und des unteren Endumlenkungspaars. Die Kopplungseinheiten sind beispielsweise als Schlitten ausgebildet, die entlang einer Führung vor und zurück verfahren können.

Die Bauelemente des ersten Förderbands 100 und des zweiten Förderbands 200 sind an einer Tragstruktur 400 mit einer vertikalen Trägerplatte 410 und einer davon abstehenden in Förderrichtung verlaufenden horizontalen Trägerplatte 420 vorgesehen. Die vertikale Trägerplatte 410 dient unter anderem zur Lagerung der Aufgabeumlenkung 101, der Austragsumlenkung 203, der Führungsrollen 107, 207, der Spannrollen 108, 208 und 209, der Zwischenumlenkungen 105 und 205 sowie der Antriebsrollen 131, 222 und 223 des ersten und zweiten Förderbands 100 und 200. Weiter kann die vertikale Trägerplatte 410 den Zugmittelantrieb 300 unterstützen. Die horizontale Trägerplatte 420 kann als Führung für die Endumlenkungen, bzw. die Kopplungseinheiten dienen oder eine solche Führung aufweisen. Hierfür erstreckt sich die horizontale Trägerplatte 420 vorteilhaft mittig zwischen den oberen Bandschlaufen 110, 210 und den unteren Bandschlaufen 115, 215 und zwischen der ersten Zwischenumlenkung 105 und der zweiten Zwischenumlenkung 205, wie in den Figuren 3a bis 3c ersichtlich. Die obere Kopplungseinheit 310 und die untere Kopplungseinheit 312 können beispielsweise mittels Rollen 314 an einer schienenartigen Führung der horizontalen Trägerplatte 420 geführt werden, wie in Figur 3a ersichtlich.

Der konstruktive Aufbau der Fördereinrichtung erfolgt demnach in einer Balkonbauweise, d. h. die Fördereinrichtung hat eine Festseite, die von der vertikalen Trägerplatte bereitgestellt wird und eine Losseite, die freien Zugang ermöglicht. Auf der Losseite befinden sich keine Trägerelemente. Dadurch können die Bänder nach deren Entspannung in Richtung Losseite einfach und schnell entnommen werden für Service und Reinigung. Auch die Remontage der Bänder geht entsprechend einfach und schnell von statten. Auf der Festseite werden die Bauelemente, wie vorher beschrieben, befestigt. Ferner reicht die Breite der horizontalen Trägerplatte aus, damit die ganze Breite der Bänder darauf abgetragen werden kann.

Weiter kann die Tragstruktur 400 den Zugmittelantrieb 300 aufnehmen. An der vertikalen Trägerplatte 410 ist hierfür eine Zugmittelführung 320 vorgesehen, in der eine Zugkette 310 umlaufend geführt wird. Die Zugmittelführung 320 umfasst die Zugmittelumlenken 322, welche die Zugketten 301 aussen um die Zwischenumlenkungen 105 und 205 führen. Die Zugmittelführung ist derart an der vertikalen Trägerplatte 410 angeordnet, dass eine obere Länge der Zugketten 301 auf einer Höhe zu liegen kommt, die zwischen den oberen und unteren Schlaufenlagen 111, 112 und 211, 212 der aneinander anschliessenden ersten und zweiten oberen Bandschlaufe 110 und 210 liegt, und eine untere Länge der Zugketten 301 auf einer Höhe liegt, die zwischen den oberen und unteren Schlaufenlagen 116, 117 und 216, 217 der aneinander anschliessenden ersten und zweiten unteren Bandschlaufe 115 und 215 liegt, wie in den Figuren 3a bis 3c ersichtlich.

Durch diese Zugmittelführung ist es möglich, dass die Zugkette 301 parallel zu der ersten und zweiten oberen Bandschlaufe 110, 210 geführt ist und von den Zugketten 301 längliche Stützelemente 330 abstehen, die in die oberen Bandschlaufen 110, 210 zwischen die oberen Schlaufenlagen 111, 211 und die unteren Schlaufenlagen 112, 212 hineinragen, um die oberen Schlaufenlagen 111, 211, die das Obertrum der ersten und zweiten Förderbänder 100 und 200 bilden, zu stützen. In Figur 3d ist die Anordnung der Tragstruktur 400 mit dem Antrieb 300 ohne die Förderbänder 100 und 200 gezeigt. Es ist ersichtlich, dass eine Vielzahl von Stützelementen 330 vorgesehen ist, die mit ihren Enden in der Zugkette 310 gelagert sind.

Wie in Figur 3d ersichtlich, ist die obere Kopplungseinheit 310 mit den oberen Endumlenkungen 104, 204 an eine obere Zugkettenstrecke 302 und die untere Kopplungseinheit 312 mit den unteren Endumlenkungen 106, 206 ist an eine untere Zugkettenstrecke 303 gekoppelt. Die obere Kopplungseinheit 310 und die untere Kopplungseinheit 312 werden somit gegenläufig entlang der Förderrichtung F verschoben. Eine Zugkettenlänge zwischen den Kopplungseinheiten ist vorzugsweise identisch, so dass die Kopplungseinheiten eine gleichlange Verschiebestrecke nutzen können.

Zusammengefasst sind die erste obere Endumlenkung 104 und die zweite obere Endumlenkung 204 mittels des Antriebs 300 gemeinsam entlang der Förderrichtung F derart verschiebbar, dass eine fördernde Länge des ersten Förderbands 100, d.h. das erste Obertrum, und eine fördernde Länge des zweiten Förderbands 200, d.h. das zweite Obertrum während eines Transports von Produktreihen PR durch Verschieben der Endumlenkungen 104, 204 gegenläufig veränderlich sind. Die oberen Bandschlaufen 110 und 210 dienen somit einer lückenlos getakteten Übergabe der Produktreihen von dem ersten Förderband 100 zum zweiten Förderband 200. Beim Verkürzen der oberen Bandschlaufen entsteht ein Bandüberschuss, der in Form der unteren Bandschlaufen 115 und 215 aufgefangen wird. Durch die gegenläufig angetriebenen oberen Endumlenkungen 104, 204, bzw. deren obere Kopplungseinheit 310, und unteren Endumlenkung 106, 206, bzw. deren untere Kopplungseinheit 312, wird bei einem Verkürzen der fördernden Bandlänge durch Verkürzen der oberen Bandschlaufe automatisch auch der damit einhergehende Bandüberschuss durch ein Verlängern der unteren Bandschlaufe aufgenommen. Damit kann eine zuverlässige und effiziente taktgetreue Übergabe der Produkte vom ersten Förderband auf das zweite Förderband erfolgen.

Der Ablauf einer Produktförderung von dem Zwischenspeicher 2 mittels der Fördereinrichtung 1 zur Weiterverarbeitungseinrichtung 3 wird anhand der Figuren 1a bis 1e beschrieben. In Figur 1a ist die Fördereinrichtung in einer Position gezeigt, bei der das erste Förderband 100 zur Übernahme einer Produktreihe aus dem Zwischenspeicher 2 bereit ist. Das erste Förderband 100 ist leer. Das heisst alle Produkte P einer Produktreihe wurden an das zweite Förderband 200 übergeben. Auf dem zweiten Förderband 200 kommen die Produkte P mit ihrem einen Ende auf dem ersten Parallelband 201 und mit ihrem anderen Ende auf dem zweiten Parallelband 202 zu liegen. Das erste Parallelband 201 ist mit einer schnelleren Geschwindigkeit angetrieben als das zweite Parallelband 202, so dass das eine Ende der Produkte P schneller gefördert wird als das andere Ende und sich die Produkte P bei der Förderung durch das zweite Förderband 200 drehen. Über die Länge des zweiten Förderbands 200 werden die Produkte vorteilweise um circa 45° gedreht und weisen eine definierte Taktung auf. Von dem zweiten Förderband 200 werden die Produkte an das Förderband mit einer Seitenführung zur Drehung der Produkte 5 übergeben.

Das Förderband mit einer Seitenführung zur Drehung der Produkte 5 dient zum Weiterdrehen der Produkte. Hierfür weist es eine von seinem Obertrum 51 hochstehende und schräg in die Förderlinie hineinragende Seitenführung 52 aufweist. Die vorgedrehten Produkte kommen mit ihrem anderen Ende, d.h. dem in Förderrichtung hinten liegenden Ende, an der Seitenführung 52 an und gleiten an diesem entlang, wobei sie weitergedreht werden, da die Seitenführung 52 schräg in die Förderline der Produkte hineinverläuft. Am Ende des Förderbands mit einer Seitenführung zur Drehung der Produkte 5 sind die Produkte P um 90° zu ihrer Ausgangsposition nach dem Austragen aus dem Zwischenspeicher verdreht und werden über die Pitching-Bänder an die Weiterverarbeitungseinrichtung abgegeben.

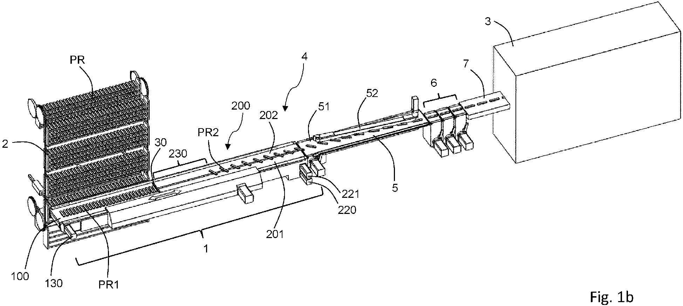

In Figur 1b ist die Fördereinrichtung in einer Position gezeigt, bei der eine Produktreihe PR1 als nacheilende Produktreihe auf das erste Förderband 100 übernommen ist. Dabei steht das erste Förderband 100 still und das in Förderrichtung vorderste Produkt liegt kurz vor der oberen Endumlenkung 104 des ersten Förderbands 100 am Übergabebereich 30. Die Endumlenkungen der Förderbänder stehen ebenfalls still. Allerdings wird das zweite Förderband 200 während der Produktübernahme weiter angetrieben und die vorauseilende Produktreihe PR2 wird fortlaufend ausgeführt. Auf den Parallelbändern 201 und 202 des zweiten Förderbands 200 entsteht somit eine Leerstrecke.

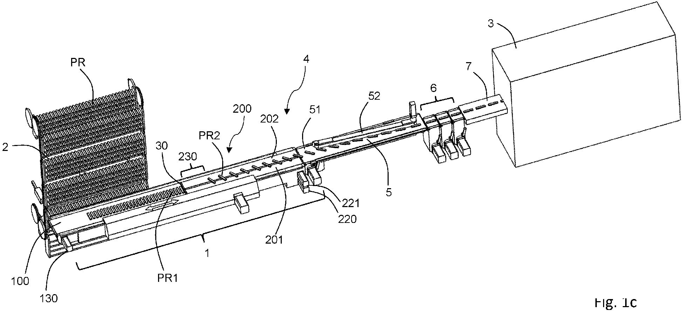

In Figur 1c ist die Fördereinrichtung in einer Position gezeigt, bei der eine Übergabe der nachlaufenden Produktreihe PR1 an das zweite Förderband 200 vorbereitet wird. Dabei werden die oberen Endumlenkungen 104 und 204 der Förderbänder 100 und 200 in Förderrichtung verschoben. Dadurch verlängert sich die fördernde Länge des ersten Förderbands 100, indem sich die erste obere Bandschlaufe 110 verlängert und die erste untere Bandschlaufe 115 verkürzt. Da die Endumlenkungen 104 und 204 gekoppelt sind, wird gleichzeitig das zweite Förderband 200 verkürzt, indem sich die zweite obere Bandschlaufe 110 verkürzt und die zweite untere Bandschlaufe 115 verlängert. Dadurch verkürzt sich die Leerstrecke 230 auf dem zweiten Förderband 200, wie in Figur 1c ersichtlich ist, und die nacheilende Produktreihe PR1 holt gegenüber der zweiten Produktreihe PR2 auf. Das erste Förderband 100 wird von der Steuereinrichtung mit einer Geschwindigkeit angetrieben, bei der das erste Produkt der nachfolgenden Produktreihe PR1 kurz vor dem Übergabebereich 30 verbleibt. Hierfür wird die Bandgeschwindigkeit des ersten Förderbands in Abhängigkeit einer Verschiebegeschwindigkeit der Endumlenkungen, bzw. der Kopplungseinheiten, eingestellt. Gleichzeitig wird die vorauseilende Produktreihe PR2 weiterhin fortlaufend ausgeführt. Die Endumlenkungen, bzw. die Kopplungseinheiten, werden von der Steuereinrichtung mit einer Verschiebegeschwindigkeit in Abhängigkeit einer Produktgeschwindigkeit auf dem zweiten Förderband angetrieben, damit die nachfolgende Produktreihe PR1 aufholen kann.

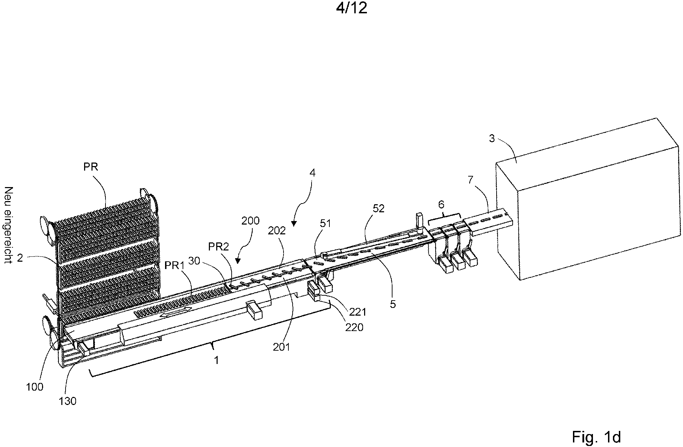

In Figur 1d ist die Fördereinrichtung in einer Position gezeigt, in der die Übergabe der nachlaufenden Produktreihe PR1 an das zweite Förderband erfolgt. In dieser Position sind die Endumlenkung der Förderbänder 100 und 200 so weit in Förderrichtung verschoben, dass das letzte Produkt der vorauseilenden Produktreihe PR2 kurz hinter dem Übergabebereich liegt. Gleichzeitig liegt das erste Produkt der nacheilenden Produktreihe PR1 vor dem Übergabebereich 30 und ist bereit an das zweite Förderband 200 übergeben zu werden. Nun werden die Endumlenkungen entgegen der Förderrichtung zurückverschoben, sodass sich das zweite Förderband 200 verlängert und das erste Förderband 100 verkürz. Die zweite obere Bandschlaufe 204 wird quasi unter die Produkte geschoben, die dann von den beiden Parallelbändern 201 und 202 übernommen werden. Das erste und das zweite Förderband 100 und 200 werden weiter angetrieben, wobei die Geschwindigkeit des ersten Förderbands 100 an eine vorbestimmte Taktung der nacheilenden Produktreihe PR1 angepasst wird. Erfindungsgemäss werden die Produkte der nacheilenden Produktreihe PR1 lückenlos, kontinuierlich und staudrucklos mit einer vorgegebenen Taktung zur Weiterverarbeitungseinrichtung gefördert. Die Förderbänder fördern die Produkte in dieser Position der Fördereinrichtung, bis das ersten Förderband 100 leer ist.

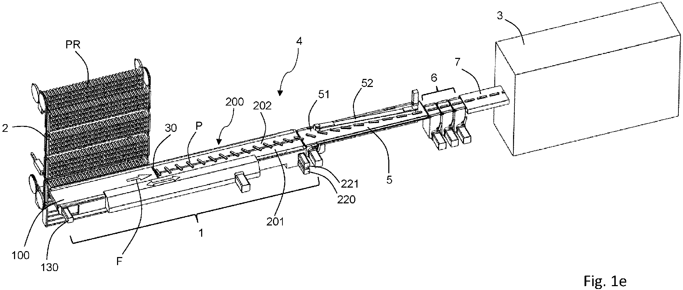

In Figur 1e ist die Fördereinrichtung in einer Position gezeigt, in der die Übergabe der nachfolgenden Produktreihe PR1 an das zweite Förderband 200 abgeschlossen ist. Die Endumlenkungen sind so weit zurückverschoben, dass das letzte Produkt der nacheilenden Produktreihe PR1 auf dem zweiten Förderband 200 angekommen ist und das erste Förderband 100 leer ist. Die Fördereinrichtung ist zur Übernahme einer weiteren Produktreihe bereit. Daher entspricht diese Position der Position aus Figur 1a.

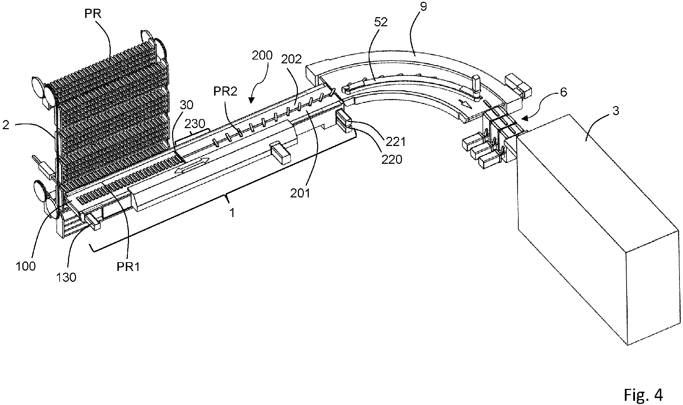

Figur 4 zeigt eine zweite Produktionsanlage mit einer Fördereinrichtung nach der Erfindung, die eine Abwandlung der Ausführungsvariante aus Figur 1a bis 1e darstellt. In dieser Produktionsanlage weist die Dreheinrichtung ein seitlich abbiegendes Förderband mit einer Seitenführung zur Drehung der Produkte 9 auf. Das Förderband mit einer Seitenführung zur Drehung der Produkte 9 ist um 90° gegenüber Eingangsförderrichtung gedreht. Die Seitenführung 52 ist ebenfalls seitlich gebogen, so dass sie in die Förderlinie der Produkte hineinragt, so dass die Produkte beim Abgleiten an der Seitenführung gedreht werden.

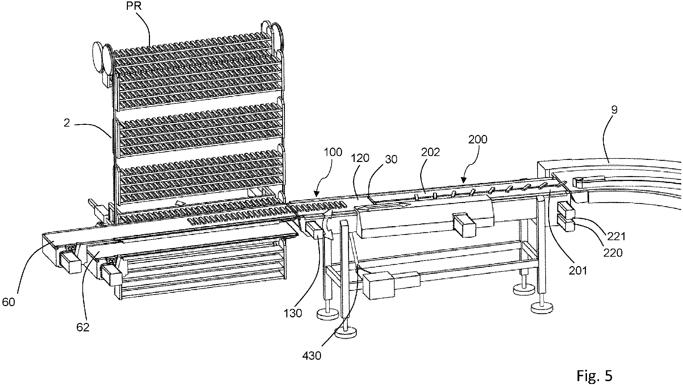

In Figur 5 ist eine dritte Produktionsanlage mit einer Fördereinrichtung nach der Erfindung mit zwei übereinander angeordneten Queraustragsbändern gezeigt. Ein oberes Queraustragsband 60 und ein darunter angeordnetes unteres Queraustragsband 62 sind am Zwischenspeicher 2 zur Übernahme von Produktreihen aus dem Speicher vorgesehen. Die Queraustragsbänder 60 und 62 sind als herkömmliche Förderband ausgebildet, auf welche die Produktreihen ausgeschoben und dann in Förderrichtung abtransportiert werden. In dieser Ausführungsvariante schliesst sich die Fördereinrichtung 1 auf gleicher Höhe an das obere Queraustragsband 60 an und weist einlaufseitig eine Vertikalweiche auf. Zur Ausbildung der Vertikalweiche ist der Einlauf des ersten Förderbandes 100 mit einer Kurbelstange 430 höhenverstellbar, respektiv schwenkbar, wobei die Schwenkachse mit der Drehachse der Austragsumlenkung 203 fluchtend ist. Die Fördereinrichtung kann mittels der Vertikalweiche schnell zwischen den Queraustragsbändern 60 und 62 wechseln, so dass die Austragskapazität der Produktionsanlage erhöht wird.

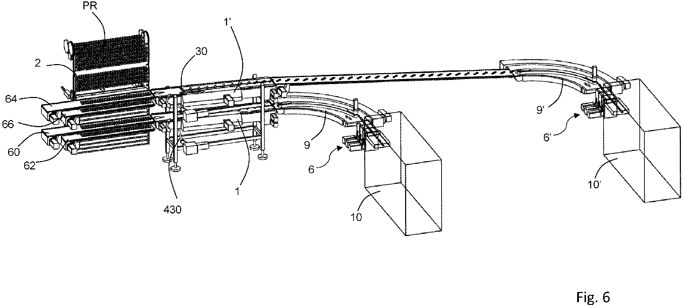

In Figur 6 ist eine vierte Produktionsanlage mit zwei übereinander angeordneten Fördereinrichtung 1 und 1' nach der Erfindung zur Beschickung von zwei Verpackungslinien 10 und 10' gezeigt. Es sind vier übereinander angeordnete Queraustragsbänder 60, 62, 64 und 66 am Zwischenspeicher 2 vorgesehen. Die Fördereinrichtungen 1 und 1' sind mit einer Vertikalweiche, wie in Figur 5 beschrieben, ausgebildet. Die Fördereinrichtung 1 ist den Queraustragsbänder 60 und 62 zugeordnet und beliefert die Verpackungslinie 10. Die Fördereinrichtung 1' ist den Queraustragsbänder 64 und 66 zugeordnet und beliefert die Verpackungslinie 10'. Die Fördereinrichtung 1 und 1' tragen Produktreihen simultan in der vorgängig beschriebenen Art und Weise aus dem Speicher aus und transportieren diese zu den nachgeschalteten Verpackungslinien 10 und 10'. Die Längsausrichtung kann auf einem gebogenen Förderband 9 bzw. 9' durch eine bogenförmige angetriebene Seitenführung 52 erfolgen. Die Austragung der Produkte aus dem Speicher auf die beiden nachgeschalteten Verpackungslinien erfolgt jeweils auf zwei übereinanderliegenden Ebenen, sodass hohe Austrageleistungen bzw. Stückleistungen erreicht werden können.

### Bezugszeichenlegende

- 1, 1': Fördereinrichtung
- 2: Zwischenspeicher
- 3: Weiterverarbeitungseinrichtung
- 4: Förderanlage
- 5: Förderband mit einer Seitenführung zur Drehung der Produkte
- 6: Pitching-Bänder
- 7: Einlaufband
- 9: gebogenes Förderband mit einer Seitenführung zur Drehung der Produkte
- 10, 10': Verpackungslinie
- 30: Übergabebereich
- 51: Obertrum
- 52: Seitenführung
- 60: Queraustragsband
- 62: Queraustragsband
- 64: Queraustragsband
- 66: Queraustragsband

- 100: erstes Förderband
- 101: Aufgabeumlenkung
- 104: erste obere Endumlenkung
- 105: erste Zwischenumlenkung
- 106: erste untere Endumlenkung
- 107: Führungsrolle
- 108: Spannrolle
- 110: erste obere Bandschlaufe
- 111: obere Schlaufenlage
- 112: untere Schlaufenlage
- 115: erste untere Bandschlaufe
- 116: obere Schlaufenlage
- 117: untere Schlaufenlage
- 121: Übernahmebereich
- 122: Unterstützungsblech
- 130: Antrieb
- 131: Antriebsrolle

- 200: zweite Förderband
- 201: erstes Parallelband
- 202: zweites Parallelband
- 203: Austragsumlenkung
- 204: zweite obere Endumlenkung
- 205: zweite Zwischenumlenkung
- 206: zweite untere Endumlenkung
- 207: Führungsrolle
- 208: Spannrolle
- 209: Spannrolle
- 210: zweite obere Bandschlaufe
- 211: obere Schlaufenlage
- 212: untere Schlaufenlage
- 215: zweite untere Bandschlaufe
- 216: obere Schlaufenlage
- 217: untere Schlaufenlage
- 220: Antrieb erstes Parallelband
- 221: Antrieb zweites Parallelband
- 222: Antriebsrolle des ersten Parallelband
- 223: Antrieb des zweiten Parallelband
- 225: Austragsschlaufe
- 226: Ausfuhrbereich
- 227: Unterstützungsblech
- 230: Leerstrecke

- 300: Zugmittelantrieb
- 301: Zugkette
- 302: obere Zugkettenstrecke
- 303: untere Zugkettenstrecke
- 310: obere Kopplungseinheit
- 312: untere Kopplungseinheit
- 314: Rollen
- 320: Zugmittelführung
- 322: Zugmittelumlenkung
- 330: Stützelemente

- 400: Tragstruktur
- 410: vertikale Trägerplatte
- 420: horizontale Trägerplatte
- 430: Kurbelatange

- F: Förderrichtung
- P: Produkt
- PR: Produktreihe
- PR1: nachlaufende Produktreihe
- PR2: vorlaufende Produktreihe

## Patentansprüche

1. Fördereinrichtung (1) für eine Produktförderanlage zum Transportieren von stückgutartigen Produkten (P) in einer Förderrichtung, wobei die Fördereinrichtung (1) ein erstes umlaufendes Förderband (100) und ein an dieses anschliessendes zweites umlaufendes Förderband (200) umfasst und wobei die Produkte (P) als Produktreihen (PR) dem ersten Förderband (100) zuführbar und von dem ersten Förderband (100) an das zweite Förderband (200) übertragbar sind, wobei
- das erste Förderband (100) einlaufseitig eine Aufgabeumlenkung (101) und auslaufseitig eine erste Endumlenkung (104) aufweist, wobei die erste Endumlenkung (104) in Förderrichtung verschieblich gelagert ist,
- wobei das zweite Förderband (200) einlaufseitig eine zweite Endumlenkung (204), die in Förderrichtung verschieblich gelagert ist, und auslaufseitig eine Austragsumlenkung (203) aufweist,
- wobei die erste Endumlenkung (104) und die zweite Endumlenkung (204) in einem Übergabebereich (30) zur Übergabe von Produkten aneinander anschliessen, und
- wobei die erste Endumlenkung (104) und die zweite Endumlenkung (204) mittels eines ersten Antriebs (300) gemeinsam entlang der Förderrichtung verschiebbar sind, sodass eine fördernde Länge des ersten Förderbands (100) und eine fördernde Länge des zweiten Förderbands (200) während eines Transports von Produktreihen (PR) durch Verschieben der ersten und zweiten Endumlenkungen gegenläufig veränderlich sind,
**dadurch gekennzeichnet, dass**
die Fördereinrichtung (1) längliche Stützelemente (330) aufweist, mit welchen das erste Förderband (100) und das zweite Förderband (200) zumindest teilweise zwischen der Aufgabeumlenkung (101) und der Austragsumlenkung (203) gestützt werden.

2. Fördereinrichtung nach Anspruch 1, **dadurch gekennzeichnet, dass** die Aufgabeumlenkung (101) und die Austragsumlenkung (203) in Förderrichtung im Wesentlichen feststehend sind.

3. Fördereinrichtung nach einem der vorhergehenden Ansprüche, **dadurch gekennzeichnet, dass** das erste Förderband (100) eine erste ortsfeste Zwischenumlenkung (105) aufweist, mittels welcher das erste Förderband (100) in eine oben liegende erste Bandschlaufe (110) mit der verschieblich gelagerten ersten Endumlenkung (104) und eine erste untere Bandschlaufe (115) mit einer verschieblich gelagerten ersten unteren Endumlenkung (106) unterteilt ist, und das zweite Förderband (200) eine zweite ortsfeste Zwischenumlenkung (205) aufweist, mittels welcher eine obenliegende zweite Bandschlaufe (210) mit der verschieblich gelagerten zweiten Endumlenkung (204) und eine zweite untere Bandschlaufe (215) mit einer verschieblich gelagerten zweiten unteren Endumlenkung (206) unterteilt, wobei die erste obere Bandschlaufe (110) und die zweite obere Bandschlaufe (210) im Übergangsbereich (30) aneinander anschliessen.

4. Fördereinrichtung nach Anspruch 3, wobei die länglichen Stützelemente (330) in die Bandschlaufen (110, 210) zwischen eine obere Schlaufenlage (116, 216) und eine untere Schlaufenlage (117, 217) zum Stützen der oberen Schlaufenlagen (116, 216) hineinragen.

5. Fördereinrichtung nach einem der Ansprüche 3 oder 4, **dadurch gekennzeichnet, dass** die obenliegende erste Endumlenkung (104) und die obenliegende zweite Endumlenkung (204) durch eine verschiebbar angeordnete obere Kopplungseinheit (310) und die erste untere Endumlenkung (106) und die zweite untere Endumlenkung (206) durch eine verschiebbar angeordnete untere Kopplungseinheit (312) miteinander gekoppelt sind.

6. Fördereinrichtung nach Anspruch 5, **dadurch gekennzeichnet, dass** die obere Kopplungseinheit (310), die untere Kopplungseinheit (312) und die länglichen Stützelemente (330) verschieblich an einer Führung gelagert sind, die sich entlang des ersten Förderbands (100) über den Übergabebereich (30) und entlang des zweiten Förderbands (200) erstreckt.

7. Fördereinrichtung nach einem der vorhergehenden Ansprüche, **dadurch gekennzeichnet, dass** der Antrieb für die Endumlenkungen und/oder die Kopplungseinheiten und/oder die länglichen Stützelemente (330) als ein entlang einer Führung für die Endumlenkungen und/oder die Kopplungseinheiten angeordneter umlaufender Zugmittelantrieb (300) ausgebildet ist.

8. Fördereinrichtung nach Anspruch 7, **dadurch gekennzeichnet, dass** der Zugmittelantrieb (300) mit einem umlaufenden Zugmittel (301) ausgebildet ist, das sich von der ersten Zwischenumlenkung (105) des ersten Förderbands (100) zu der zweiten Zwischenumlenkung (205) des zweiten Förderbands (200) erstreckt und um diese Zwischenumlenkungen umgelenkt ist.

9. Fördereinrichtung nach Anspruch 7 oder 8, **dadurch gekennzeichnet, dass** der Zugmittelantrieb (300) mit einem umlaufenden Zugmittel (301) ausgebildet ist, das parallel zu der ersten und zweiten oberen Bandschlaufe (110, 210) geführt ist, wobei von dem Zugmittel (301) die länglichen Stützelemente (330) abstehen, die in die Bandschlaufen (110, 210) zwischen eine obere Schlaufenlage (116, 216) und eine untere Schlaufenlage (117, 217) hineinragen und zum Stützen der oberen Schlaufenlagen (116, 216) vorgesehen sind.

10. Fördereinrichtung nach einem der vorhergehenden Ansprüche, **dadurch gekennzeichnet, dass** ein zweiter Antrieb (130) für das erste Förderband (100) und ein dritter Antrieb für das zweite Förderband vorgesehen sind, welche jeweils das erste Förderband (100) und das zweite Förderband (200) unabhängig voneinander antreiben.

11. Fördereinrichtung nach einem der vorhergehenden Ansprüche, **dadurch gekennzeichnet, dass** das zweite Förderband (200) als Doppelband mit einem ersten Parallelband (201) und einem zweiten Parallelband (202) ausgebildet ist, wobei die Parallelbänder (201, 202) unabhängig voneinander mittels getrennter Antriebe (220, 221) antreibbar sind.

12. Fördereinrichtung nach einem der vorhergehenden Ansprüche, **dadurch gekennzeichnet, dass** eine Tragstruktur (400) mit einer vertikalen Trägerplatte (410) und einer davon abstehenden und in Förderrichtung verlaufenden horizontalen Trägerplatte (420) vorgesehen ist, wobei die vertikale Trägerplatte (410) zur Lagerung von Zwischenumlenkungen (105, 205) des ersten und zweiten Förderbands und des Antriebs (300) dient und die horizontale Trägerplatte (320) als Führungsauflage für die Endumlenkungen und/oder Kopplungseinheiten ausgebildet ist.

13. Fördereinrichtung nach einem der vorhergehenden Ansprüche, **dadurch gekennzeichnet, dass** die fördernde Länge des ersten Förderbands (100) in einen Übernahmebereich (121) mit feststehender Länge zur Übernahme von Produktreihen auf die Fördereinrichtung und einen Austragsbereich in Form einer Bandschlaufe (110) unterteilt ist, wobei der Austragsbereich eine veränderliche Länge aufweist.

14. Fördereinrichtung nach einem der vorhergehenden Ansprüche, **dadurch gekennzeichnet, dass** die Fördereinrichtung einlaufseitig schwenkbar ausgebildet ist, wobei die Schwenkachse mit der Drehachse der Austragsumlenkung (203) fluchtend ist.

15. Steuerverfahren für eine Fördereinrichtung (1) zum Transportieren von stückgutartigen Produkten (P) und/oder für eine Produktionsanlage mit einer solchen Fördereinrichtung (1) nach einem der Ansprüche 1 bis 14, wobei eine Steuereinrichtung, die zur Steuerung eines oder mehrerer Antriebe für die verschieblich gelagerten Endumlenkungen (104, 204, 106, 206), die Kopplungseinheiten (310, 312) der Endumlenkungen, das erste Förderband (100) und/oder das zweite Förderband (200) vorgesehen ist, eine Verschiebegeschwindigkeit der verschieblich gelagerten Endumlenkungen (104, 204, 106, 206) und/oder Kopplungseinheiten (310, 312), eine Fördergeschwindigkeit des ersten Förderbands (100) und/oder eine Fördergeschwindigkeit des zweiten Förderbands (200) derart einstellt, dass sich die fördernde Länge des ersten Förderbands (100) und die fördernde Länge des zweiten Förderbands (200) während eines Transports von Produktreihen derart ändert, dass sich ein vorderstes Produkt auf dem ersten Förderband (100) an ein letztes Produkt auf dem zweiten Förderband (200) gemäss einer auf dem zweiten Förderband (200) vorliegenden Produkttaktung anschliesst.

16. Steuerverfahren nach Anspruch 15, wobei Produkte (P) einer Produktreihe (PR) derart auf das als Doppelband ausgebildetes zweites Förderband (200) übergeben werden, dass die Produkte mit einem Ende auf dem ersten Parallelband (201) und einem gegenüberliegenden Ende auf dem zweiten Parallelband (202) zu liegen kommen und das erste Parallelband (201) relative zum zweiten Parallelband (202) schneller angetrieben wird, so dass das eine Ende der Produkte relative zum gegenüberliegenden Ende schneller transportiert wird und die Produkte (P) auf dem zweiten Förderband (200) gedreht werden.
